# EUROPEAN PATENT APPLICATION

(11) **EP 2 560 222 A1**
(43) Date of publication of application: **20.02.2013**
(21) Application number: 10832398.1
(22) Date of filing: 16.04.2010
(51) Int. Cl.: H01M 2/10

(54) **ELECTRIC STORAGE DEVICE**

(71) Applicant: Toyota Jidosha Kabushiki Kaisha, Toyota-shi, Aichi 471-8571 (JP)
(72) Inventor: WATANABE, Hirotaka, Toyota-shi Aichi 471-8571 (JP); MURAYAMA, Ryogo, Toyota-shi Aichi 471-8571 (JP)
(74) Representative: TBK
(86) International application number: PCT/JP2010/002790
(87) International publication number: WO 2011/128949

(57) **Abstract**

An electric storage apparatus (1) has a plurality of electric storage stacks (10) placed in line in a second direction (Y direction) . Each of the electric storage stacks has a plurality of electric storage elements (20) placed in line in a first direction (X direction) and partition plates (31, 32) each placed between two of the electric storage elements adjacent to each other in the first direction. The electric storage stack is restrained by a restraint unit (41, 42) in the first direction. In adjacent two of the electric storage stacks, two of the partition plates adjacent to each other in the second direction have coupling portions (31c1, 32c1, 31b1, 32b1) fixed to each other in a plane orthogonal to the first direction and capable of relative movement in the first direction.

## Description

### [TECHNICAL FIELD]

The present invention relates to an electric storage apparatus having a plurality of electric storage stacks each including a plurality of electric storage elements placed in line in one direction such that the plurality of electric storage stacks are placed in line in a direction orthogonal to the arrangement direction of the plurality of electric storage elements.

### [BACKGROUND ART]

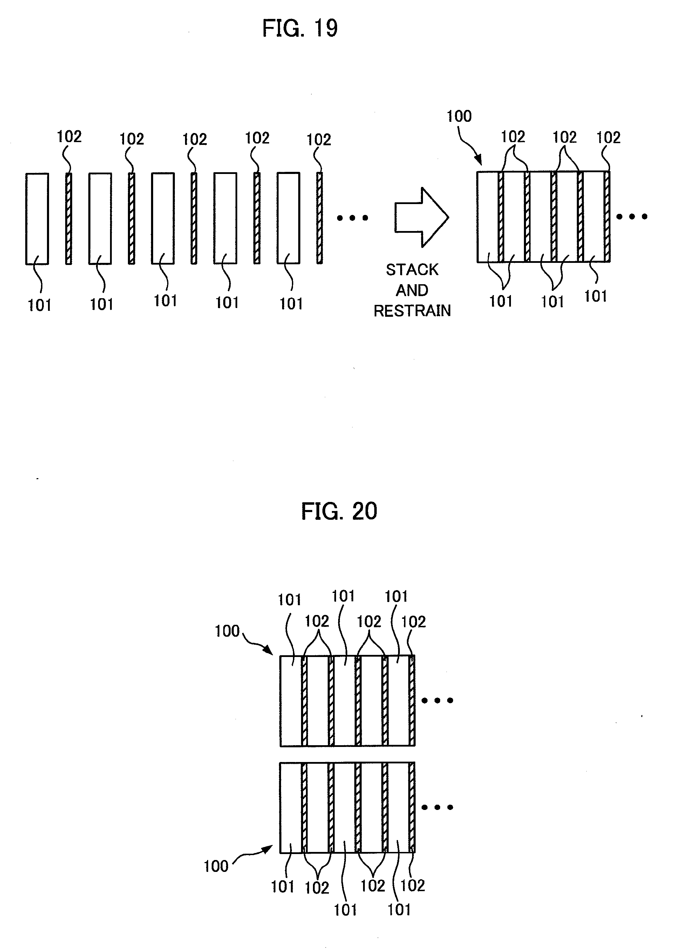

As shown in Fig. 19, forusingapluralityof cells 101 to constitute a battery stack 100, the plurality of cells 101 may be arranged in one direction and a plate 102 made of resin may be placed between adjacent two of the cells 100. Fig. 19 is a schematic diagram showing part of the battery stack 100 when viewed from above.

A pair of end plates (not shown) are placed on both ends of the battery stack 100 in the arrangement direction (left-right direction in Fig. 19) of the plurality of cells 101. The pair of end plates are used to apply a restraint force to the battery stack 100. The restraint force refers to a force which brings the adjacently placed two of the cells 101 closer to each other.

On the other hand, as shown in Fig. 20, a plurality of battery stacks 100 may be prepared and the prepared plurality of battery stacks 100 may be placed in line in a direction (up-down direction in Fig. 20) orthogonal to a direction in which a plurality of cells 101 are arranged (see, for example Patent Document 1). For placing the plurality of battery stacks 100 in line, each of the battery stacks 100 is assembled and then the plurality of battery stacks 100 are placed in line.

### [PRIOR ART DOCUMENTS]

### [PATENT DOCUMENTS]

[Patent Document 1] Japanese Patent Laid-Open No. 2009-238643
[Patent Document 2] Japanese Patent Laid-Open No. 2007-048637
[Patent Document 3] Japanese Patent Laid-Open No. 1994-349466

### [SUMMARY OF THE INVENTION]

### [PROBLEMS TO BE SOLVED BY THE INVENTION]

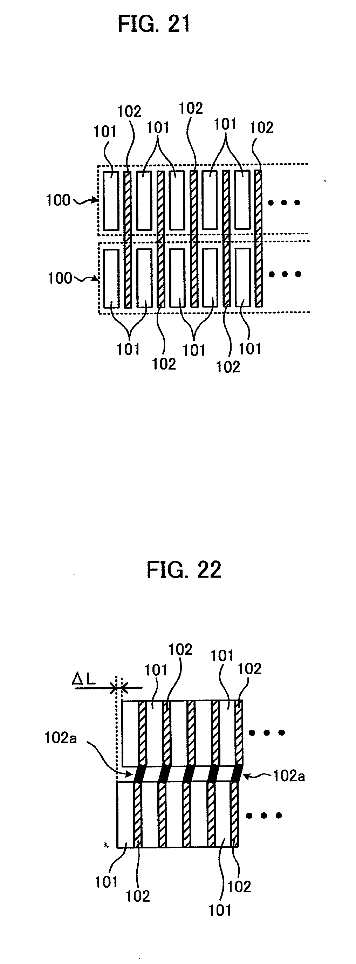

For placing the plurality of battery stacks 100 in line, as shown in Fig. 21, it is contemplated that plates 102 common to the adjacently placed two battery stacks 100 are used. In the configuration shown in Fig. 21, the single plate 102 is surrounded by four cells 101. When the plates 102 shown in Fig. 21 are used, the work of placing the cells 101 and the plates 102 in line can be simplified as compared with the case where each of the battery stacks 100 is assembled and then the two battery stacks 100 are placed in line.

In the configuration shown in Fig. 21, however, when the two battery stacks 100 have a tolerance in the arrangement direction of the cells 101, application of a restraint force to each of the battery stacks 100 may cause excessive load on the plates 102. Even when the tolerance of the cell 101 is slight, the battery stack 100 composed of the plurality of cells 101 results in a large tolerance.

For example, when a difference ΔL is found between the lengths of the two battery stacks 100 (lengths in the direction in which the cells 101 are arranged) as shown in Fig. 22, application of a restraint force to each of the battery stacks 100 deforms a region 102a of each of the plates 102 that is located between the two battery stacks 100. The plates 102 may be broken depending on the length of the difference ΔL.

When the pair of end plates are used to provide a restraint force for the two battery stacks 100, it is possible to prevent the excessive load from being applied only to the regions 102a of the plates 102. However, the battery stack 100 having the shorter length may be provided with an insufficient restraint force due to the tolerance of the two battery stacks 100. In other words, variations occur in the restraint force acting on the two battery stacks 100.

It is thus an obj ect of the present invention to provide an electric storage apparatus includingapluralityof electric storage stacks placed in line in which the workability of the assembly of the plurality of electric storage stacks can be improved and a tolerance in the plurality of electric storage stacks can be accommodated.

### [MEANS FOR SOLVING THE PROBLEMS]

According to a first aspect, the present invention includes a plurality of electric storage stacks, each of the stacks having a plurality of electric storage elements placed in line in a first direction and partition plates, each of the plates being placed between two of the electric storage elements adjacent to each other in the first direction, the electric storage stacks being placed in line in a second direction orthogonal to the first direction, and a restraint unit restraining each of the electric storage stacks in the first direction. In adjacent two of the electric storage stacks, eachof two of thepartition plates adjacent to each other in the second direction has a coupling portion, the coupling portions of the two partition plates being fixed to each other in a plane orthogonal to the first direction and being capable of relative movement in the first direction.

As the coupling portions provided for the two partition plates, it is possible to use a bump portion and a recess portion which are engaged with each other. Specifically, the bump portion can be provided for one of the two partition plates and can protrude toward the other of the two partition plates. The recess portion can be provided for the other of the two partition plates and can be engaged with the bump portion to prevent relative movement of the two partition plates in the plane orthogonal to the first direction and to allow movement of the bump portion in the first direction. When the recess portion extends in the first direction, the bump portion can be moved in the first direction.

The coupling portion can be provided at both end of the partition plate in the second direction. Specifically, it is possible to provide the bump portion (coupling portion) at both ends of the partition plate and to provide the recess portion (coupling portion) at both ends of thepartitionplate. Alternatively, the bump portion (coupling portion) can be provided for one end of the partition plate and the recess portion (coupling portion) can be provided for the other end of the partition plate. When the coupling portion is provided at both ends of thepartition plate, a required number of partition plates can be placed in line in the second direction in the state in which they are coupled to each other.

The one of the two parti t ion plates can be provided wi th a plurality of bump portions and the other of the two partition plates can be provided with a plurality of recess portions. The plurality of recess portions can be formed of a first recess portion having a region extending in the first direction and a region extending in a direction different from the first direction, and a second recess portion extending in the first direction. At least one of the bump portion and the recess portion can be formed of a material capable of elastic deformation. The engagement of the bump portion and the recess portion can be released by elastically deforming at least one of the bump portion and the recess portion. Alternatively, the engagement of the bump portion and the recess portion may be released by breaking at least one of the bump portion and the recess portion.

A path can be formed by using surfaces opposite to each other in the second direction of the two of the partition plates adjacent to each other in the second direction. The path can be used as a path for flowing a heat exchange medium for use in temperature adjustment of the electric storage element. Since the path is formed by using the partition plates, any dedicated member for forming the path can be omitted to reduce the number of parts.

The plurality of electric storage stacks are placed in line in a horizontal direction or a vertical direction. Specifically, the plurality of electric storage stacks can be placed in line in the horizontal direction or the vertical direction depending on the space in which the electric storage apparatus is to be mounted.

The restraint unit can be formed of a pair of restraint plates placed on both ends of the electric storage stack in the first direction, and a connecting member extending in the first direction and connected to the pair of restraint plates. Each of two of the restraint plates adjacent to each other in the second direction has a coupling portion, the coupling portions of the two restraint plates being fixed to each other in a plane orthogonal to the first direction and being capable of relative movement in the first direction.

According to second aspect, the present invention provides an electric storage apparatus including a plurality of electric storage stacks, each of the electric storage stacks having a plurality of electric storage elements placed in line in a first direction, the electric storage stacks being placed in line in a second direction orthogonal to the first direction, and a restraint unit restraining each of the electric storage stacks in the first direction. The restraint unit has a pair of restraint plates placed on both ends of the electric storage stack in the first direction and a connecting member extending in the first direction and connected to the pair of restraint plates. Each of two of the restraint plates adjacent to each other in the second direction has a coupling portion, the coupling portions of the two restraint plates being fixed to each other in a plane orthogonal to the first direction and being capable of relative movement in the first direction.

In each of the electric storage stacks, a partition plates can be placed between two of the electric storage elements adjacent to each other in the first direction. The partition plate can be formed of an insulating material such as resin and can insulate the two electric storage elements between which the partition plate is sandwiched. When the surfaces of the partition plate that are opposed to the electric storage elements are formed as bumpy faces, a space can be formed on the outer faces of the electric storage elements. The space can be used as the path for flowing the heat exchange medium (gas or liquid) for adjusting the temperature of the electric storage element.

### [EFFECT OF THE INVENTION]

According to the first aspect of the present invention, since the two partition plates are formed integrally in the plane orthogonal to the first direction, the partition plates can be handled easily to facilitate the assembly and the like of the electric storage apparatus. The two partition plates can be moved relatively in the first direction. Thus, even when the plurality of electric storage stacks have a tolerance in the first direction, the tolerance can be accommodated by relatively moving the two partition plates in the first direction. This can provide an appropriate restraint force for each of the electric storage stacks.

According to the second aspect of the present invention, since the two restraint plates are formed integrally in the plane orthogonal to the first direction, the restraint plates can be handled easily to facilitate the assembly and the like of the electric storage apparatus. The two restraint plates can be moved relatively in the first direction. Thus, even when the plurality of electric storage stacks have a tolerance in the first direction, the tolerance can be accommodated by relatively moving the two restraint plates in the first direction. This can provide an appropriate restraint force for each of the electric storage stacks.

### [BRIEF DESCRIPTION OF DRAWINGS]

[Fig. 1] A top view of a battery pack which is Embodiment 1 of the present invention.
[Fig. 2] A diagram showing the outer appearance of a cell in Embodiment 1.
[Fig. 3A] A front view showing the configuration of a partition plate used in two battery stacks in Embodiment 1.
[Fig. 3B] A top view showing the configuration of the partition plate used in the two battery stacks in Embodiment 1.
[Fig. 4] An enlarged view of a coupling portion of thetwopartition plates in Embodiment 1.
[Fig. 5A] A front view showing the state in which the two partition plates are coupled in Embodiment 1.
[Fig. 5B] A top view showing the state in which the two partition plates are coupled in Embodiment 1.
[Fig. 6] A top view of the battery pack when a tolerance is found in the two battery stacks in Embodiment 1.
[Fig. 7] A diagram showing a supply path and a discharge path for a heat exchange medium in Embodiment 1.
[Fig. 8] A diagram showing a supply path and a discharge path for a heat exchange medium in a modification of Embodiment 1.
[Fig. 9] A diagram showing a supply path and a discharge path for a heat exchange medium in another modification of Embodiment 1.
[Fig. 10A] Afrontviewofapartitionplatewhichisamodification of Embodiment 1.
[Fig. 10B] A top view of the partition plate which is the modification of Embodiment 1.
[Fig. 11] A diagram showing the state when the coupling between a bump portion and a recess portion is released in Embodiment 1.
[Fig. 12] A front view showing the configuration of two end plates in Embodiment 2 of the present invention.
[Fig. 13] A top view of part of a battery pack in Embodiment 2.
[Fig. 14] A side view of a partition plate in Embodiment 3 of the present invention.
[Fig. 15A] A diagram for explaining the coupling operation of two partition plates in Embodiment 3.
[Fig. 15B] A diagram for explaining the coupling operation of the two partition plates in Embodiment 3.
[Fig. 15C] A diagram for explaining the coupling operation of the two partition plates in Embodiment 3.
[Fig. 15D] A diagram for explaining the coupling operation of the two partition plates in Embodiment 3.
[Fig. 16] A side view showing a partition plate in a modification of Embodiment 2.
[Fig. 17] A side view showing a partition plate in another modification of Embodiment 2.
[Fig. 18] A side view showing a partition plate in another modification of Embodiment 2.
[Fig. 19] A schematic diagram showing how to assemble a battery stack.
[Fig. 20] A top view of two battery stacks placed in line.
[Fig. 21] A diagram showing the configuration of two battery stacks when a common plate is used.
[Fig. 22] A diagram showing the state in which excessive load is applied to portions of the plates.

### [EMBODIMETNS OF THE INVENTION]

Preferred embodiments of the present invention will hereinafter be described.

### [Embodiment 1]

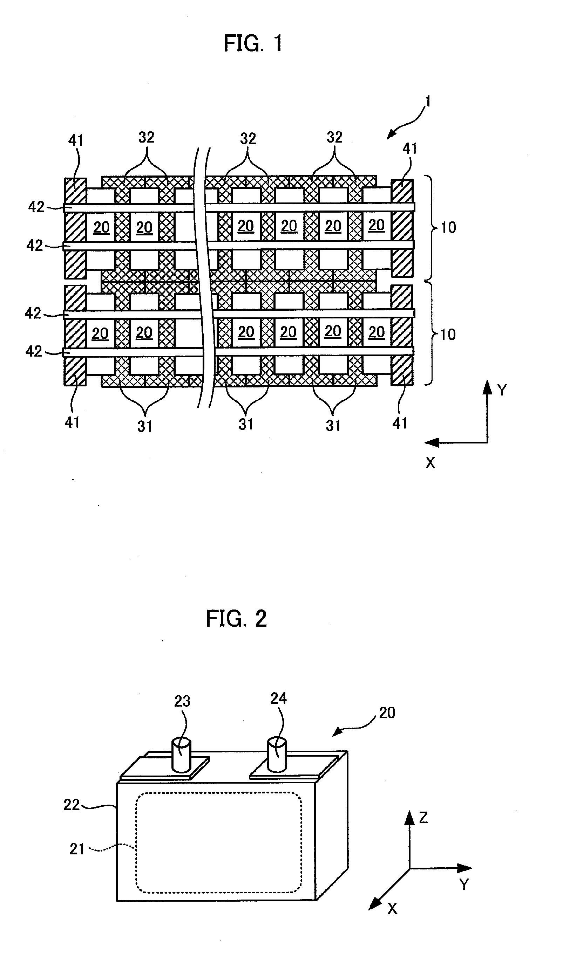

A battery pack (electric storage apparatus) which is Embodiment 1 of the present invention will be described. Fig. 1 is a diagram of the battery pack according to the present embodiment when viewed from above. In Fig. 1, an X axis and a Y axis are axes orthogonal to each other. A Z axis is an axis orthogonal to the X axis and the Y axis. In the present embodiment, the Z axis is used as an axis corresponding to a vertical direction.

The battery pack 1 of the present embodiment can be mounted on a vehicle, for example, and the output from the battery pack can be used to run the vehicle. Examples of the vehicle include hybrid vehicles and electric vehicles. The hybrid vehicle has an internal-combustion engine or a fuel cell as a power source for running of the vehicle in addition to the battery pack. The electric vehicle relies totally on the battery pack as a power source of the vehicle. In the vehicle equipped with the battery pack, kinetic energy generated in braking of the vehicle is changed into regenerated power which can be stored in the battery pack.

In Fig. 1, the battery pack 1 has two battery stacks (corresponding to electric storage stacks) 10 placed in line in the Y direction (corresponding to a second direction). The battery stacks 10 have a pluralityofcells (corresponding to electric storage elements) 20 placed in line in the X direction (corresponding to a first direction) and partitionplates 31 and 32 each placed between two of the cells 20 adjacent to each other in the X direction. Since the two battery stacks 10 have the same configuration, specific description will be made of the configuration of one of the battery stacks 10.

A pair of end plates (corresponding to a restraint plate) 41 are placed on both ends of the battery stack 10 in the arrangement direction (X direction) of the plurality of cells 20. The pair of end plates 41 are in contact with the cells 20 placed on both ends of the battery stack 10.

Restraint bands (corresponding to a connecting member) 42 extending in the arrangement direction of the plurality of cells 20 are connected to the pair of end plates 41. In the present embodiment, two restraint bands 42 are placed on an upper face of the battery stack 10 and two restraint bands (not shown) are also placed on a lower face of the battery stack 10. When the restraint bands 42 shift the pair of end plates 41 in a direction in which they are brought closer to each other, the battery stack 10 can be supplied with a restraint force. The restraint force is a force which causes the two of the cells 20 adjacent in the X direction to be pushed closer to each other.

While the restraint bands 42 are placed on the upper face and the lower face of the battery stack 10 in the present embodiment, the position where the restraint bands 42 are placed can be set as appropriate. For example, the restraint bands 42 may be placed on a side face of the battery stack 10. In addition, the number of the restraint bands 42 can be set as appropriate. Any structure can be used as long as the restraint force canbeprovided for the battery stack 10. For example, it is possible to employ a structure in which the restraint bands 42 are omitted and each of the paired end plates 41 is pushed.

For the cell 20, a secondary battery can be used such as a nickel metal hydride battery or a lithium-ion battery. An electric double layer capacitor maybe used instead of the secondarybattery. Thenumber of the cells 20 constituting the single battery stack 10 can be set on the basis of the required output of the battery pack 1, the number of the battery stacks 10 and the like.

As shown in Fig. 2, the cell 20 has a power generating component 21 and a battery case 22 which accommodates the power generating component 21. The power generating component 21 is a component which realizes charge and discharge and is composed of a positive electrode element, a negative electrode element, and a separator placed between the positive electrode element and the negative electrode element. The positive electrode element is provided by forming a positive electrode layer containing a positive electrode active material on a surface of a collectingplate. The negative electrode element is provided by forming a negative electrode layer containing a negative electrode active material on a surface of a collecting plate.

Apositive electrode terminal 23 and a negative electrode terminal 24 are provided on an upper face of the battery case 22. The positive electrode terminal 23 is electrically connected to the positive electrode element of the power generating component 21, and the negative electrode terminal 24 is electrically connected to the negative electrode element of the power generating component 21. The positions where the positive electrode terminal 23 and the negative electrode terminal 24 are provided can be set as appropriate, and for example, the positive electrode terminal 23 and the negative electrode terminal 24 may be provided on a side face of the cell 20.

A bus bar (not shown) is connected to the positive electrode terminal 23 of one of the two cells 20 adjacently placed in the X direction and to the negative electrode terminal 24 of the other of those cells 20. This allows the two cells 20 to be connected electrically in series. In the present embodiment, the plurality of cells 20 constituting the battery stack 10 are connected electrically in series, and the two battery stacks 10 are also connected electrically in series. It should be noted that cells 20 connected electrically in parallel may be included. For example, two battery stacks 10 maybe connected electrically in parallel.

In the battery stack 10 of the present embodiment, the plurality of cells 20 are placed in line in the X direction. However, the present invention is not limited thereto. For example, the plurality of cells 20 may be connected electrically in series to constitute a single battery module (corresponding to the electric storage element) and then a plurality of battery modules may be placed in line in the X direction. The battery module may be formed to have the same configuration as that of the cell 20 shown in Fig. 2, and the plurality of cells 20 may be placed in line in a module case which corresponds to the battery case 22.

The partition plates 31 and 32 can be used in order to insulate the two cells 20 adjacently placed in the X direction from each other and can be formed of a material having an insulating property such as resin. In addition, the partition plates 31 and 32 can be used to form a path for flowing a heat exchange medium along outer faces of the cells 20. Specifically, when the surfaces of the partition plates 31 and 32 that are opposed to the cells 20 are formed as bumpy faces, a space usable as the path for the heat exchange medium can be formed on the outer faces of the cells 20.

The heat exchange medium is used in order to adjust the temperature of the cells 20 and can be formed of gas or liquid. When the heat exchange medium is brought into contact with the outer faces of the cells 20, heat exchange can be performed between the heat exchange medium and the cells 20 to adjust the temperature of the cells 20. For example, when the cells 20 generate heat, a heat exchange medium for cooling can be brought into contact with the cells 20 to suppress a rise in temperature of the cells 20. When the cells 20 are excessively cooled, a heat exchange medium for heating can be brought into contact with the cells 20 to suppress a drop in temperature of the cells 20.

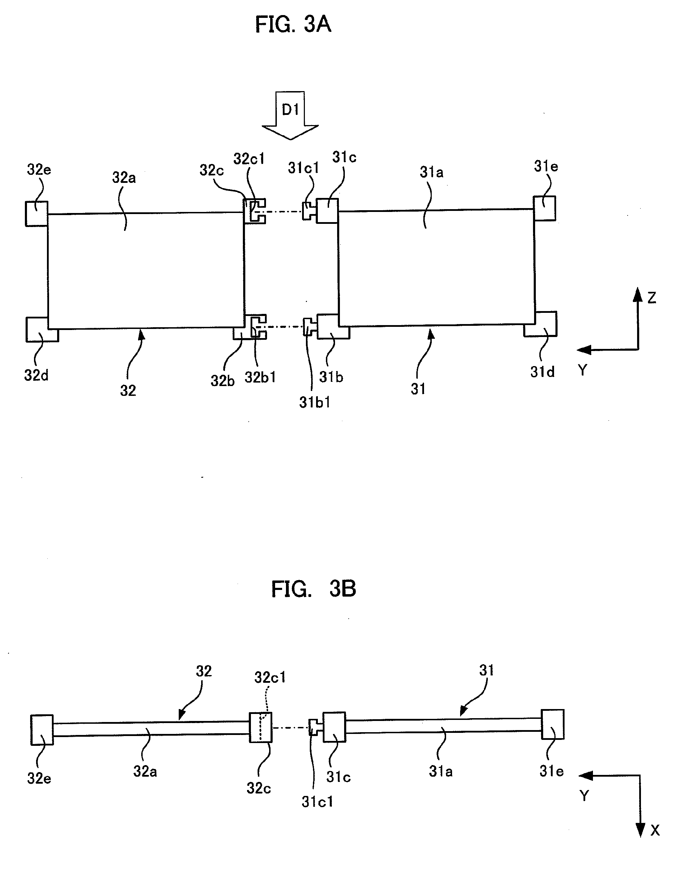

Next, the configuration of the partition plates 31 and 32 will be described specifically. Fig. 3A is a front view of the partition plates 31 and 32 used in the two battery stacks 10 when viewed from the X direction. Fig. 3B is a top view of the partition plates 31 and 32 when viewed from a direction indicated by an arrow D1 in Fig. 3A. Only the partition plate 31 is used in one of the two battery stacks 10 and only the partition plate 32 is used in the other of those battery stacks 10.

The partition plate 31 has a partition plate body 31a and four arms 31b to 31e. The partition plate body 31a is opposed to the cell 20 in the X direction and has the bumpy faces which form the abovementioned path for the heat exchange medium. The arms 31b to 31e are provided at positions corresponding to four corners of the cell 20 (the battery case 22) and can hold the cell 20. The two partition plates 31 adjacent in the X direction are in contact with each other on the arms 31b to 31e. The arms 31b and 31c of thepartitionplate 31 are placed at positions opposed to the partitionplate 32 in the Y direction and have bump portions 31b1 and 31c1 which protrude toward the partition plate 32, respectively.

The partition plate 32 has a partition plate body 32a and four arms 32b to 32e. The partition plate body 32a is opposed to the cell 20 in the X direction and has the bumpy faces which form the abovementioned path for the heat exchange medium. The arms 32b to 32e are provided at positions corresponding to four corners of the cell 20 and can hold the cell 20. The two partition plates 32 adjacent in the X direction are in contact with each other on the arms 32b to 32e. The arms 32b and 32c are placed at positions opposed to the partition plate 31, and the bump portions 31b1 and 31c1 of the partition plate 31 are inserted into recess portions 32b1 and 32c1 of the arms 32b and 32c, respectively.

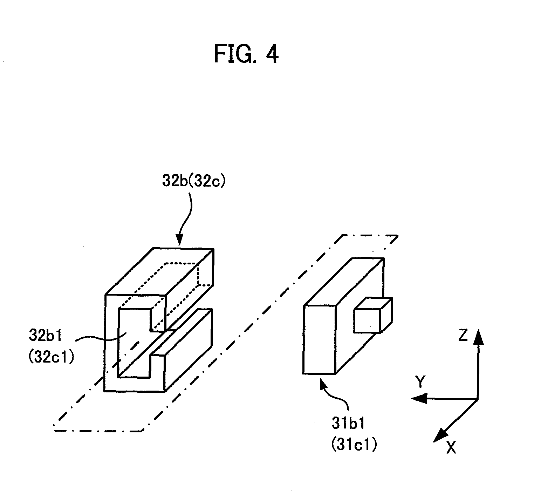

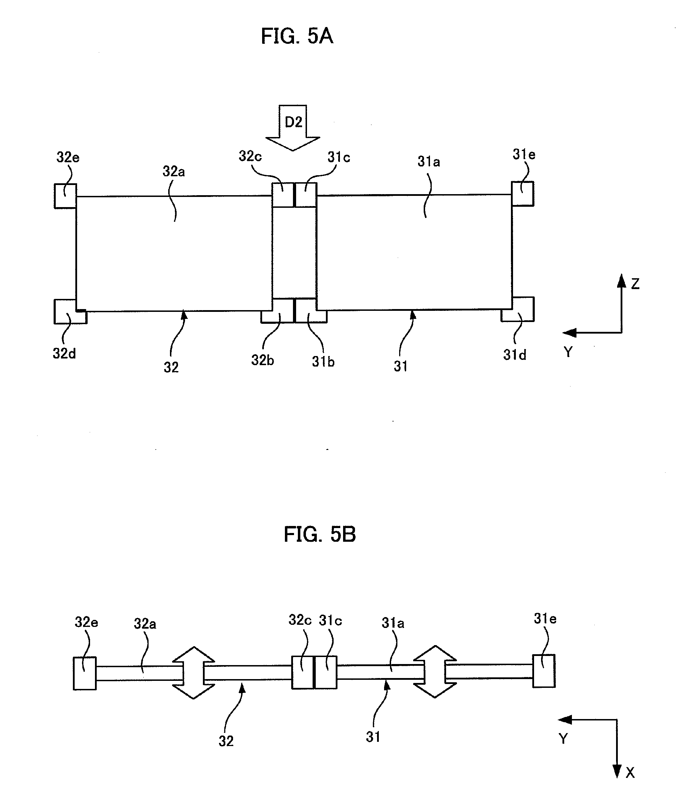

Specifically, the bump portions 31b1 and 31c2 can be inserted into the recess portions 32b1 and 32c1, respectively, as shown in Fig. 4. The insertion of the bump portions 31b1 and 31c1 into the recess portions 32b1 and 32c1 enables the integral configurationof thepartition plates 31 and 32 as shown in Figs. 5A and 5B to prevent the partition plates 31 and 32 from being separated in the Y direction. In other words, it is possible to prevent a relative displacement of the partition plates 31 and 32 in a Y-Z plane. Fig. 5A is a front view of the partition plates 31 and 32 in a coupled state when viewed from the X direction. Fig. 5B is a top view of the partition plates 31 and 32 when viewed from a direction indicated by an arrow D2 in Fig. 5A.

Since the recess portions 32b1 and 32c1 extend in the X direction, the bump portions 31b1 and 31c1 and the recess portions 32b1 and 32c1 can be moved relatively in the X direction. In other words, as shown by arrows in Fig. 5B, the partition plates 31 and 32 in the coupled state can be slid relatively in the X direction.

While the two bump portions 31b1 and 31c1 are provided for the partition plate 31 and the two recess portions 32b1 and 32c1 are provided for the partition plate 32 in the present embodiment, the present invention is not limited thereto. For example, the partition plate 31 may be provided with a set of a bump portion and a recess portion and the partition plate 32 may be provided with a set of a recess portion and a bump portion which are engaged with the bump portion and the recess portion of the partition plate 31, respectively. With the configuration, the two partition plates can also be integrated in the Y-Z plane and can be moved relatively in the X direction. The number of the bump portions and the recess portions provided for the partition plates 31 and 32 can be set as appropriate. For example, only one bump portion may be provided for the partition plate 31 and only one recess portion may be provided for the partition plate 32.

The shapes of the bump portion and the recess portion (the shapes when viewed from the X direction) can be set as appropriate. It is essential only that the two partition plates can be prevented from being displaced relatively in the Y-Z plane when the bump portion is engaged with the recess portion.

In the present embodiment, the integrally configured partition plates 31 and 32 and the cells 20 are placed alternately, thereby making it possible to assemble the battery pack 1 in which the two battery stacks 10 are placed in line. Since the integrally configured partition plates 31 and 32 are used, the workability of the assembly can be improved as compared with the case where the partition plates and the cells are placed in line for each of the battery stacks 10.

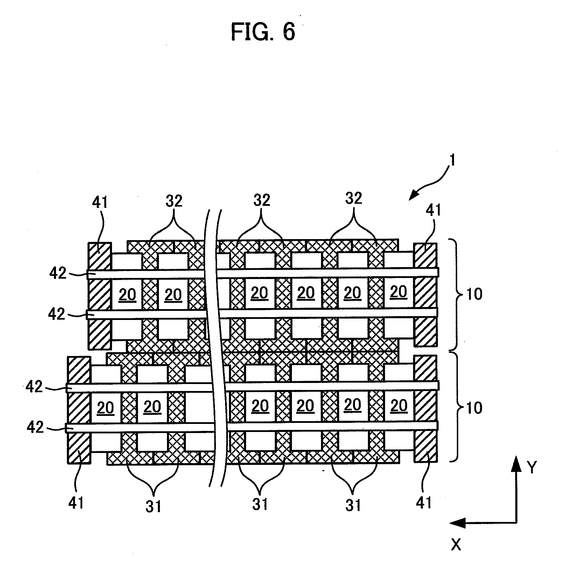

Although the partition plates 31 and 32 are integrally configured, they can be moved relatively in the X direction as described above. Thus, when a tolerance is found between the lengths of the two battery stacks 10 (lengths in the X direction), the partition plates 31 and 32 can be moved relatively in the X direction to accommodate the tolerance as shown in Fig. 6. As a result, the integrally configured partition plates 31 and 32 are not deformed due to the tolerance of the battery stacks 10, and each of the battery stacks 10 can be restrained by an appropriate force.

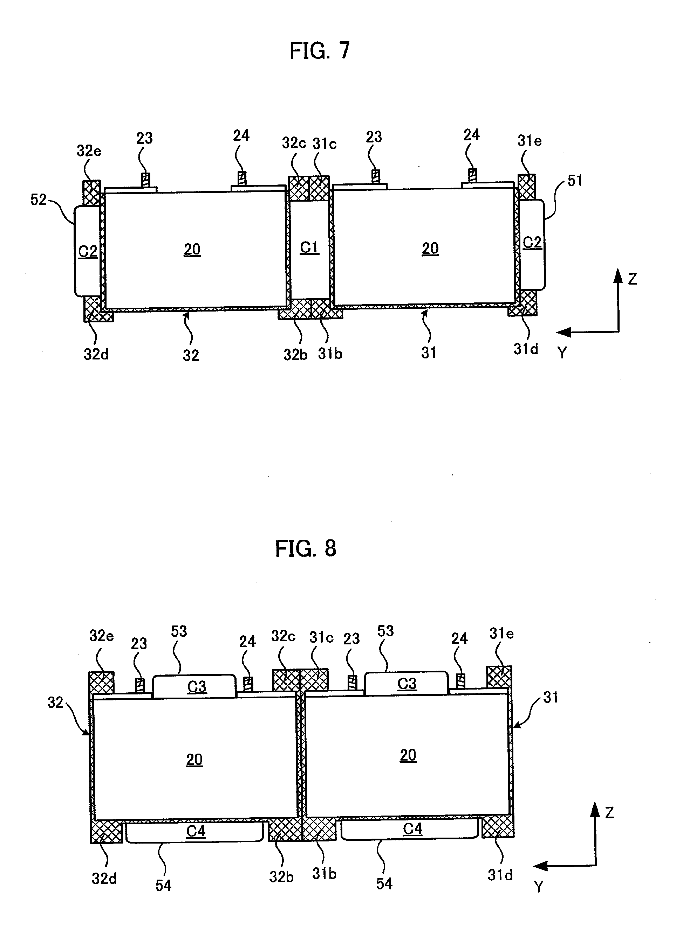

On the other hand, when the partition plates 31 and 32 according to the present embodiment are used, a path C1 can be formed between the two battery stacks 10 as shown in Fig. 7. The path C1 can be used for flowing the heat exchange medium. Since the path C1 is formed by using the partition plates 31 and 32, any ducts for forming the path C1 can be omitted and thus the number of parts can be reduced. In addition, since the path C1 is shared between the two battery stacks 10, the battery pack 1 can be reduced in size as compared with the case where the path is provided for each of the battery stacks 10. The path C1 can be used as a path for supplying the heat exchange medium to the cells 20 or can be used as a path for discharging the heat exchange medium after heat exchange with the cells 20.

In addition, paths C2 can be formed by placing ducts 51 and 52 in the battery stacks 10 as shown in Fig. 7. When the path C1 is used as the path for supplying the heat exchange medium, the two paths C2 can be used as the path for discharging the heat exchange medium. Specifically, the heat exchange medium is supplied to the path C1, passes between the cells 20 and the partition plates 31 (or the partition plates 32), and then is moved to the paths C2.

Alternatively, when the path C1 is used as the path for discharging the heat exchange medium, the two paths C2 can be used as the path for supplying the heat exchange medium. Specifically, the heat exchange medium is supplied to the two paths C2, passes between the cells 20 and the partition plates 31 (or the partition plates 32), and then is moved to the path C1.

While the supply path and the discharge path for the heat exchange medium are provided on the side faces of each of the battery stacks 10 in the configuration shown in Fig. 7, the present invention is not limited thereto. For example, as shown in Fig. 8, ducts 53 and 54 may be provided for an upper face and a lower face of each of the battery stacks 10, respectively. Paths C3 are formed by the ducts 53 and paths C4 are formed by the ducts 54. One of the paths C3 and C4 is used as the supply path for the heat exchange medium and the other is used as the discharge path for the heat exchange medium. While the duct 53 is placed between the positive electrode terminal 23 and the negative electrode terminal 24 in each of the cells 20 in the configuration shown in Fig. 8, the duct may be placed so as to cover the positive electrode terminal 23 and the negative electrode terminal 24.

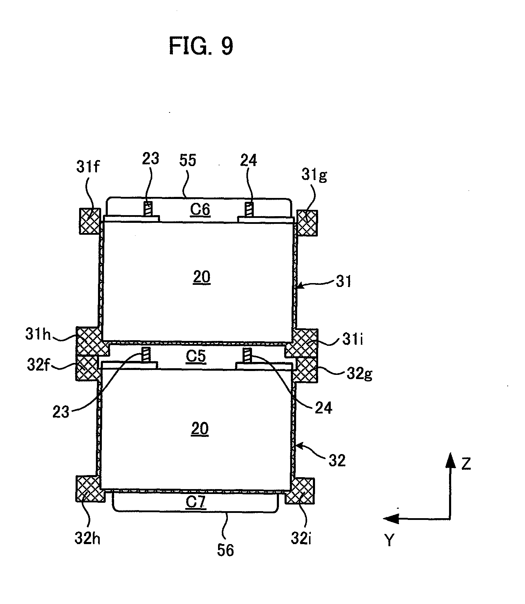

On the other hand, the battery pack 1 may be configured as shown in Fig. 9. In the configuration shown in Fig. 9, the two battery stacks 10 are placed in line in the up-down direction (the Z direction). The partition plate 31 used in the battery stack 10 placed on the upper side has four arms 31f to 31i, and the two arms 31h and 31i placed in lower portions of thepartitionplate 31 have bump portions formed thereon which extend downward. The bump portions correspond to the bump portions 31b1 and 31c1 described in the present embodiment.

The partition plate 32 used in the battery stack 10 placed on the lower side has four arms 32f to 32i, and the two arms 32f and 32g placed in upper portions of the partition plate 32 have recess portions formed therein which are engaged with the bump portions of the arms 31h and 31i, respectively. The recess portions correspond to the recess portions 32b1 and 32c1 described in the present embodiment.

In the configuration shown in Fig. 9, the partition plates 31 and 32 are coupled in the Z direction such that they are not displaced relatively in the Y-Z plane. The partition plates 31 and 32 can be moved relatively in the X direction. This can achieve the same effects as those in the present embodiment.

The partition plates 31 and 32 can form a path C5. The path C5 can be used as the path for flowing the heat exchange medium. In the configuration shown in Fig. 9, a duct 55 is placed on an upper face of the battery stack 10 placed on the upper side to form a path C6. In addition, a duct 56 is placed on a lower face of the battery stack 10 placed on the lower side to form a path C7. The paths C5 to C7 can be used as the supply path or the discharge path for the heat exchange medium.

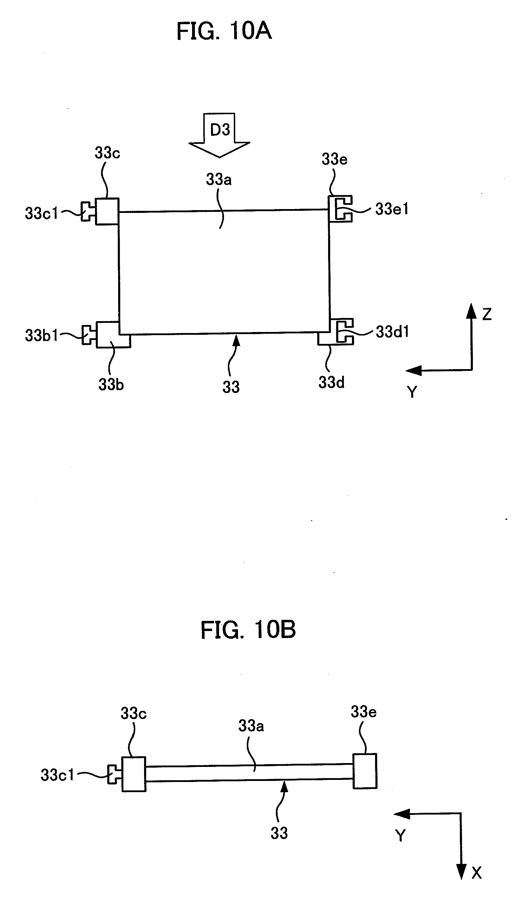

While the present embodiment has been described in the case where the two battery stacks 10 are placed in line, the present invention is not limited thereto. Specifically, the number of the battery stacks 10 placed in line can be set as appropriate. When three or more battery stacks are placed in line, a partition plate 33 shown in Figs. 10A and 10B can be used. Fig. 10A is a front view of the partition plate which is a modification of the present embodiment when viewed from the X direction. Fig. 10B is a top view of the partition plate of the present modification when viewed from a direction indicated by an arrow D3 in Fig. 10A.

The partition plate 33 has a partition plate body 33a and four arms 33b to 33e. The arms 33b and 33c have bump portions 33b1 and 33c1 which protrude in the Y direction, respectively, and the bump portions 33b1 and 33c1 correspond to the bump portions 31b1 and 31c1 described in the present embodiment. The arm portions 33d and 33e have recess portions 33d1 and 33e1 which can be engaged with the bump portions 33b1 and 33c1, respectively, and the recess portions 33d1 and 33e1 correspond to the recess portions 32b1 and 32c1 described in the present embodiment.

When a plurality of partition plates 33 are prepared, the plurality of partition plates 33 can be coupled to each other in the state in which they are placed in line in the Y direction. By way of example, for placing three battery stacks 10 in line in the Y direction, three partition plates 33 may be placed in line in the Y direction and be coupled to each other. This allows integral configuration of the three partition plates 33 placed in line in the Y direction.

The partition plate 33 shown in Figs. 10A and 10B is used in placing the plurality of battery stacks 10 in line in the Y direction. When the positions of the bump portions and the recess portions are changed, it is possible to realize thepartitionplate suited for the configuration in which the plurality of battery stacks 10 are placed in line in the Z direction. Specifically, the bump portion which extends in the Z direction can be provided in an upper portion of the partition plate, and the recess portion which can be engaged with that bump portion can be provided in a lower portion of the partition plate. Alternatively, a set of a bump portion and a recess portion can be provided for an upper portion of the partition plate, and a set of a recess portion and a bump portion which can be engaged with those bump portion and recess portion can be provided in a lower portion of the partition plate.

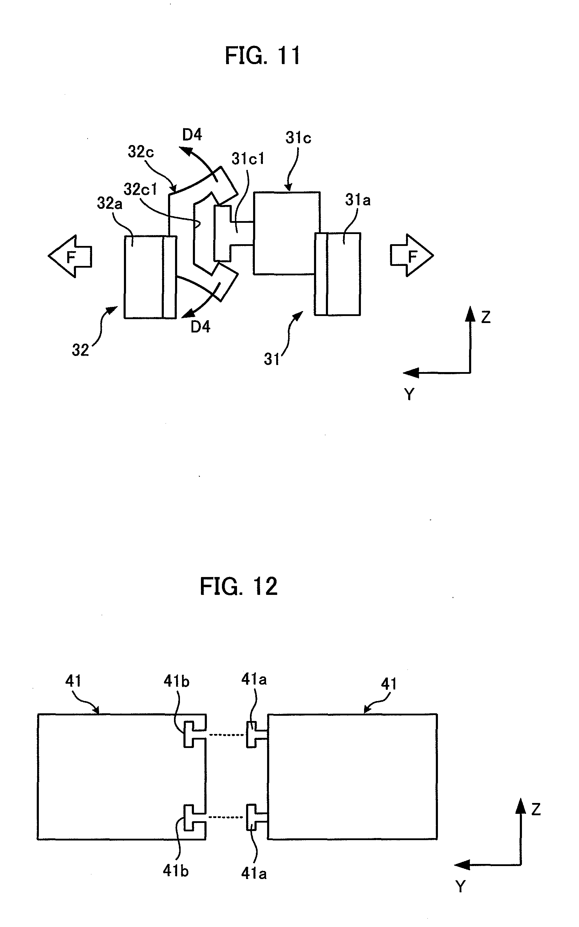

The partition plates 31 and 32 in the present embodiment can be separated from each other by imposing loads indicated by arrows F in Fig. 11. When the partition plates 31 and 32 are formed of a material such as resin capable of elastic deformation, the recess portion 32c1 of the partition plate 32 and the bump portion 31c1 of the partition plate 31 can be elastically deformed to release the engagement of the bump portion 31c1 and the recess portion 32c1. While Fig. 11 shows the state in which portions of the recess portion 31c1 are elastically deformed in the directions of arrows D4, portions of the bump portion 31c1 may be elastically deformed. It should be noted that the engagement of the bump portion 31b1 and the recess portion 32b1 can also be released by elastic deformation. Alternatively, the engagement of the bump portion 31c1 and the recess portion 32c1 may be released by breaking at least part of the bump portion 31c1 and the recess portion 32c1.

In retrieving the used battery pack 1, the partition plates 31 and 32 can be separated as described above to put the two battery stacks 10 apart fromeachother. When thepartitionplates 31 and 3 2 are coupled, the two battery stacks 10 are also coupled, and the work of conveyance or the like thereof is cumbersome. Thus, when the two battery stacks 10 are put apart from each other as described above, the work of the conveyance or the like may be performed for each of the battery stacks 10 to improve the workability.

Since the partition plates 31 and 32 can be moved relatively in the X direction, the two battery stacks 10 can also be moved relatively in the X direction. When the two battery stacks 10 are slid in the direction in which they are moved away from each other until the coupling between the partition plates 31 and 32 is completely released, the two battery stacks 10 can be separated from each other.

### [Embodiment 2]

Embodiment 2 of the present invention will hereinafter be described. Members having the same functions as those of the members described in Embodiment 1 are designated with the same reference numerals. While the two partition plates 31 and 32 placed in line in the Y direction are coupled in Embodiment 1, two end plates 41 placed in line in the Y direction are coupled in the present embodiment.

Fig. 12 is a front view of the two end plates 41 placed in line in the Y direction when viewed from the X direction. Fig. 12 shows the state in which the two end plates 41 are separated from each other. One of the end plates 41 has bump portions 41a which protrude toward the other end plate 41, and the bump portions 41a correspond to the bump portion 31b1 (see Figs. 3A and 3B) described in Embodiment 1. The other end plate 41 has recess portions 41b which are engaged with the bump portions 41a, and the recess portions 41b correspond to the recess portions 32b1 and 32c1 (see Figs. 3A and 3B) described in Embodiment 1.

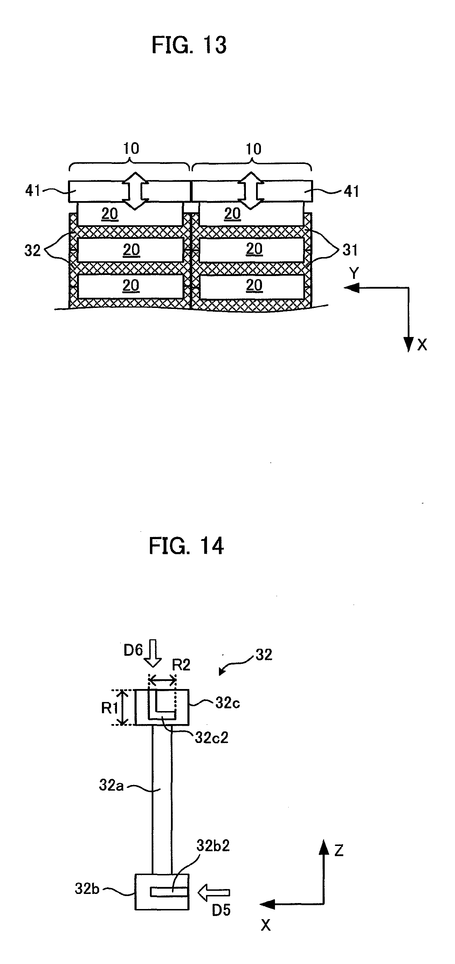

The bump portion 41a and the recess portion 41b can be coupled to fix the two end plates 41 in the Y-Z plane. In other words, the two end plates 41 are arranged so as not to be displaced from each other in the Y-Z plane. Since the recess portion 41b extends in the X direction, the two end plates 41 can be moved relatively in the X direction as shown in arrows in Fig. 13.

Since the two endplates 41 adjacent to each other in the Y direction are formed integrally in the Y-Z plane, the handling thereof is facilitated as compared with the case where the two end plates 41 are handled individually. In addition, the two end plates 41 are moved relatively in the X direction, so that any tolerance can be accommodated, even when two battery stacks 10 have the tolerance in the X direction. Thus, each of the battery stacks 10 can be restrained by an appropriate force.

While the partition plates 31 and 32 adjacent in the Y direction are coupled to each other in the present embodiment, separated partition plates may be used. Specifically, it is possible to employ a configuration in which only the two end plates 41 are slid relatively in the X direction. In addition, the modification described in Embodiment 1 can also be used in the present embodiment. Specifically, the positions and the number of the bump portions 41a and the recess portions 41b can be changed similarly to the case described in Embodiment 1.

### [Embodiment 3]

A battery pack which is Embodiment 3 of the present invention will hereinafter be described. Members having the same functions as those of the members described in Embodiment 1 are designated with the same reference numerals, and detailed description thereof is omitted. In the following, description will be made mainly of different points from Embodiment 1. The present embodiment relates to a structure for coupling two partition plates 31 adjacent to each other in the Y direction.

Fig. 14 is a diagram of a partition plate 32 when viewed from the Y direction. As described in Embodiment 1, the partition plate 32 is provided with arms 32b and 32c. In the present embodiment, recess portions formed in the arms 32b and 32c have changed shapes. Thepartition plate 31 havingbumpportions 31b1 and 31c1 is the same as that in Embodiment 1.

Specifically, while a recess portion 32b2 formed in the arm 32b extends in the X direction similarly to Embodiment 1, only one end of the recess portion 32b2 in the X direction is exposed to an outer face of the arm 32b. Thus, the bump portion 31b1 can be fitted into the recess portion 32b2 only from a direction indicated by an arrow D5. The opening region of the recess portion 32b2 shown in Fig. 14 is a region where a base end side of the bump portion 31b1 passes.

A recess portion 32c1 formed in the arm 32c has a region R1 extending in the Z direction and a region R2 extending in the X direction. One end of the region R1 is exposed at an upper face of the arm 32c, and the bump portion 31c1 can be fitted into the recess portion 32c1 only from a direction indicated by an arrow D6.

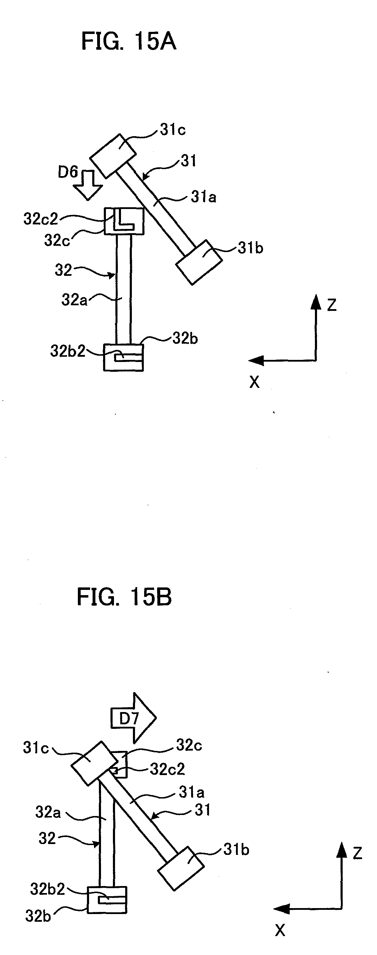

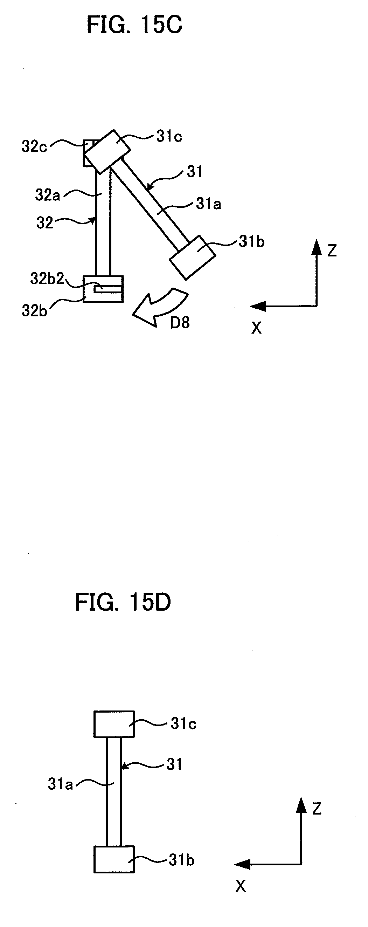

The operation of coupling the partition plate 31 to the partition plate 32 in the present embodiment will be described with reference to Figs. 15A to 15D. First, as shown in Fig. 15A, the bump portion 31c1 of the partition plate 31 is inserted into the recess portion 32c2 of the partition plate 32 and is moved in the direction of the arrow D6. In other words, the bump portion 31c1 is moved along the region R1 of the recess portion 32c2.

Next, as shown in Fig. 15B, the bump portion 31c1 is moved in a direction of an arrow D7 and is moved along the region R2 of the recess portion 32c2. Next, as shown in Fig. 15C, the partition plate 31 is turned in the direction indicated by an arrow D8 to enter the bump portion 31b1 into the recess portion 32b2. This can couple the partition plates 31 and 32 such that the partition plates 31 and 32 are placed one on the other when viewed from the Y direction.

The recess portion 32c2 is formed of the regions R1 and R2 in the present embodiment. Even when an external force in one direction (for example, the X direction) is applied to the partition plates 31 and 32 in the coupled state, thepartitionplates31and32canbeprevented from being disconnected. In addition, since the recess portion 32b2 and the recess portion 32c2 (the region R2) extend in the X direction, the partition plates 31 and 32 can be slid relatively in the X direction while they remain in the coupled state.

The shape of the recess portion formed in the partition plate 32 (the shape when viewed from the Y direction) is not limited to the shape shown in Fig. 12. Specifically, it is essential only that the recess portion should be formed of the region extending in the X direction and the region extending in a direction different from the X direction. With such a configuration, the coupling of the partition plates 31 and 32 can be prevented from being released due to an external force in one direction, and the partition plates 31 and 32 can be slid relatively in the X direction.

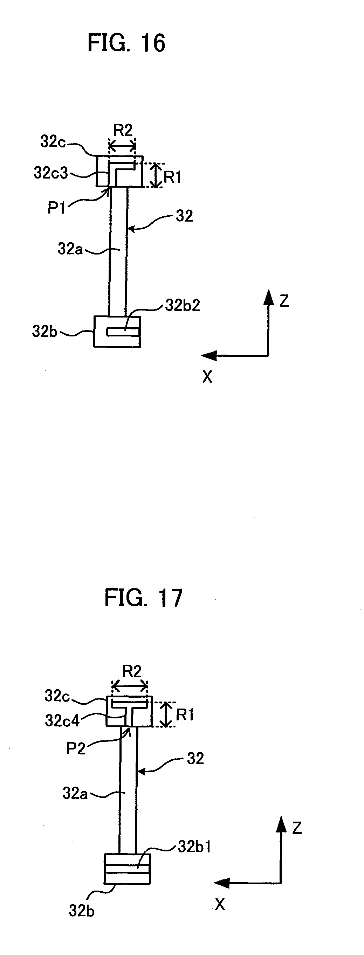

For example, partition plates 32 shown in Figs. 16 to 18 can be used. When the partition plate 32 shown in Fig. 16 is used, a bump portion 31c1 canbe fitted into a recess portion 32c3 at a fittingposition P1 formed on a lower face of an arm 32c. Then, a bump portion 31b1 may be fitted into a recess portion 32b2 while the bump portion 31c1 is moved along the recess portion 32c3.

When the partitionplate 32 shown in Fig. 17 is used, a bump portion 31c1 can be fitted into a recess portion 32c4 at a fitting position P2 formed on a lower face of an arm 32c. After the bump portion 31c1 is moved along the recess portion 32c4 in the Z direction (upward direction), the bump portion 31c1 can be moved in the left-right direction in Fig. 17. Thus, a bump portion 31b1 can be fit into a recess portion 32b1 while the bump portion 31c1 is moved in the X direction.

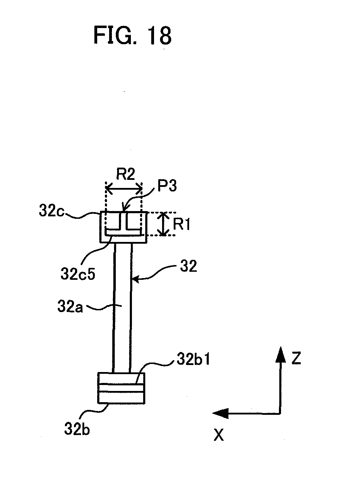

When the partition plate 32 shown inFig. 18 is used, a bump portion 31c1 can be fitted into a recess portion 32c5 at a fitting position P3 formed on an upper face of an arm 32c. After the bump portion 31c1 is moved along the recess portion 32c5 in the Z direction (downward direction), the bump portion 31c1 can be moved in the left-right direction in Fig. 18. Thus, a bump portion 31b1 can be fitted into a recess portion 32b1 while the bump portion 31c1 is moved in the X direction.

In the partition plates shown in the present embodiment and in Fig. 16 to Fig. 18, the recess portion formed of the two regions R1 and R2 is placed in the upper portion of the partition plate. Alternatively, that recess portion may be placed in the lower portion of the partition plate. However, the configuration as described in the present embodiment and the like allows the bump portion 31c1 to be easily fitted into the recess portion 32c2.

### [DESCRIPTION OF REFERENCE NUMERALS]

1: BATTERY PACK (ELECTRIC STORAGE APPARATUS)
10: BATTERY STACK (ELECTRIC STORAGE STACK)
20: CELL (ELECTRIC STORAGE ELEMENT)
21: POWER GENERATING COMPONENT
22: BATTERY CASE
23: POSITIVE ELECTRODE TERMINAL
24: NEGATIVE ELECTRODE TERMINAL
31, 32, 33: PARTITION PLATE
31a, 32a: PARTITION PLATE BODY
31b TO 31e: ARM
31b1, 31c1: BUMP PORTION
32b TO 32e: ARM
32b1, 32c1: RECESS PORTION
41: END PLATE (RESTRAINT PLATE)
42: RESTRAINT BAND (CONNECTING MEMBER)
51 TO 54: DUCT

## Claims

1. An electric storage apparatus comprising:
a plurality of electric storage stacks, each of the electric storage stacks having a plurality of electric storage elements placed in line in a first direction and partition plates, each of the partition plates being placed between two of the electric storage elements adjacent to each other in the first direction, the electric storage stacks being placed in line in a second direction orthogonal to the first direction; and
a restraint unit restraining each of the electric storage stacks in the first direction,
wherein, in adjacent two of the electric storage stacks, each of two of the partition plates adjacent to each other in the second direction has a coupling portion, the coupling portions of the two partition plates being fixed to each other in a plane orthogonal to the first direction and being capable of relative movement in the first direction.

2. The electric storage apparatus according to claim 1, wherein the coupling portion includes:
a bump portion provided for one of the two partition plates and protruding toward the other of the two partition plates; and
a recess portion provided for the other of the two partition plates and engaged with the bump portion to prevent relative movement of the two partition plates in the plane orthogonal to the first direction and to allow movement of the bump portion in the first direction.

3. The electric storage apparatus according to claim 1 or 2, wherein the partition plate has the coupling portion at both ends in the second direction.

4. The electric storage apparatus according to claim2, wherein the partition plate has the bump portion at one end in the second direction and has the recess portion at the other end in the second direction.

5. The electric storage apparatus according to claim2, wherein the one of the two partition plates has a plurality of the bump portion and the other of the two partition plates has a plurality of the recess portion, and
wherein the plurality of recess portions include:
a first recess portion having a region extending in the first direction and a region extending in a direction different from the first direction; and
a second recess portion extending in the first direction.

6. The electric storage apparatus according to claim 2, 4, or 5, wherein the bump portion and the recess portion are separated from each other in the plane orthogonal to the first direction by deformation of at least one of the bump portion and the recess portion.

7. The electric storage apparatus according to claim 6, wherein at least one of the bump portion and the recess portion is formed of a material capable of elastic deformation.

8. The electric storage apparatus according to any one of claims 1 to 7, wherein the two of the partition plates adjacent to each other in the second direction form a path for flowing a heat exchange medium for use in temperature adjustment of the electric storage element by using surfaces of the partition plates that are opposed to each other in the second direction.

9. The electric storage apparatus according to anyone of claims 1 to 8, wherein the plurality of electric storage stacks are placed in line in a horizontal direction or a vertical direction.

10. The electric storage apparatus according to any one of claims 1 to 9, wherein the restraint unit has:
a pair of restraint plates placed on both ends of the electric storage stack in the first direction; and
a connecting member extending in the first direction and connected to the pair of restraint plates.

11. The electric storage apparatus according to claim 10, wherein each of two of the restraint plates adjacent to each other in the second direction has a coupling portion, the coupling portions of the two restraint plates being fixed to each other in a plane orthogonal to the first direction and being capable of relative movement in the first direction.

12. An electric storage apparatus comprising:
a plurality of electric storage stacks, each of the electronic storage stacks having a plurality of electric storage elements placed in line in a first direction, the electric storage stacks being placed in line in a second direction orthogonal to the first direction; and
a restraint unit restraining each of the electric storage stacks in the first direction,
wherein the restraint unit has a pair of restraint plates placed on both ends of the electric storage stack in the first direction and a connecting member extending in the first direction and connected to the pair of restraint plates, and
wherein each of two of the restraint plates adjacent to each other in the second direction has a coupling portion, the coupling portions of the two restraint plates being fixed to each other in a plane orthogonal to the first direction and being capable of relative movement in the first direction.

13. The electric storage apparatus according to claim 12, wherein each of the electric storage stacks has partition plate placed between two of the electric storage elements adjacent to each other in the first direction.
